(19)

Europäisches
Patentamt
European
Patent Office
Office européen
des brevets

(11)  EP 2 208 599 A1

(12)  **EUROPEAN PATENT APPLICATION**

(43) Date of publication:
     **21.07.2010 Bulletin 2010/29**

(51) Int Cl.:
     ***B29C 44/46*** (2006.01)     ***B29C 44/34*** (2006.01)

(21) Application number: **10150737.4**

(22) Date of filing: **14.01.2010**

(84) Designated Contracting States:
     **AT BE BG CH CY CZ DE DK EE ES FI FR GB GR
     HR HU IE IS IT LI LT LU LV MC MK MT NL NO PL
     PT RO SE SI SK SM TR**

(30) Priority: **14.01.2009  IT MI20090028**

(71) Applicant: **Afros S.P.A.**
     **21042 Caronno Pertusella (VA) (IT)**

(72) Inventors:
     • **Corti, Maurizio**
       **21042, Caronno Pertusella (IT)**
     • **Fiorentini, Carlo**
       **21042, Caronno Pertusella (IT)**

(74) Representative: **Coloberti, Luigi**
     **Via E. de Amicis, 25**
     **20123 Milano (IT)**

(54)  **Method and cooled device for dispensing polyurethane mixtures**

(57)    A polyurethane mixture comprising a foaming agent is fed under pressure to a dispensing device (10) by allowing the mixture to flow along a feeding conduit (27) and the meatus of an elongated slit (14), or tubular ducts (29) conformed to allow a gradual pressure drop and release of the foaming agent; the boundary layer of the polyurethane mixture flowing along contact surfaces of the feeding conduit (27) the exit slit (14) or the ducts (29) is cooled by circulation of a cooling fluid in the body of the dispensing device (10).

Fig. 2

EP 2 208 599 A1

## Description

BACKGROUND OF THE INVENTION

This invention refers to the production of pre-expanded or frothed polyurethane foams, in which a mixture of reactive chemical components, comprising a low-boiling foaming agent, totally or partially dissolved under pressure into one or more of the reactive chemical components, is fed to a dispensing device suitable for gradually releasing the pressure and the foaming agent into a resulting mixture, and in which the mixture is made to flow along a feeding path to gradually release the pressure and the foaming agent through at least one elongated exit slit, or a number of tubular exit ducts, to output a froth.

In particular, the invention relates to a method and a device for dispensing a reactive polyurethane mixture into a mould or onto a substrate, comprising a low-boiling foaming agent suitable for boiling at ambient pressure and at low temperatures, such as temperatures lower than 15°C, by which it is possible to avoid certain problems inherent in a known dispensing device described in WO 01/10623, and to improve the dispensing and pouring of said polyurethane mixture in a pre-expanded or frothed state.

STATE OF THE ART

As known, a polyurethane material is obtained by mixing, in a liquid state, two or more chemically reactive resin components, such as a polyole and an isocyanate with possible additives and/or foaming agents dissolved in a solution under pressure, emulsifying gases and/or solid particles.

Catalysts are also used to stimulate and accelerate the chemical reaction according to a law of controlled development over time; if a more rapid reaction is required, the catalysts are dosed and formulated in a manner that the chemical reaction is accelerated by increasing the temperature of the polyurethane mixture, during the reaction step.

It is also known that a liquid polyurethane mixture has a high viscosity equal to 100 cps or even much higher, depending on the formulation, compatibility and adherence to surfaces with which the mixture comes into contact. Therefore, on the contact surfaces along the flow path of the dispensing device, a boundary layer of mixture exists, which tends to polymerise and to form an increasingly hardening layer of reacted material.

Devices for dispensing pre-expanded polyurethane mixtures, basically provided by a bar shaped body comprising a flow path for the mixture which is made to flow along a meatus of a tubular exit ducts or an elongated exit slit which extends parallel to the flow path, are known for example from WO 01/10623 which is considered the closest prior art; other dispensing devices are known for example from EP-A-0645226 and EP-A-0767728.

In a conventional foam dispensing device, the polymerised boundary layer gradually increases until to create an occlusion which prevents, over the time, a regular pressure drop and release of the foaming agent in the flow of the polyurethane mixture; the longer the reactive mixture is supplied to the dispensing device, the greater will be the thickness of the polymerised layer, until to a complete obstruction. This problem is particularly felt in cases in which the polyurethane mixture is supplied for times exceeding one minute, up to a number of hours, particularly in the presence of conduits of small diameter and/or narrow outlet apertures for the polyurethane mixture.

With conventional dispensing devices, of the type referred to, it is necessary to proceed with their periodic replacement or repeated cleaning and maintenance operations, to remove the reacted mixture which has adhered to the contact surfaces, with consequent lengthy stop of the production plants.

In polyurethane resin foaming technology, or so-called continuous foaming technology, or when the outlet conduits and openings for the mixture are particularly narrow, or particularly long compared to the cross-section, for example in controlled development of low-boiling foaming agents dissolved in the mixture such as in the typical technology of "bar-shaped" dispensing devices, the problem of controlling the pressure drop and consequently an homogeneous distribution of the outcoming frothed mixture over the time, by avoiding the occlusion of the conduits and/or outlet apertures is extremely important.

From US-A-5,512,222 it is also known a chilled trough for producing slabs of polyurethane foam, in which a liquid reactant polyurethane mixture is fed by a distribution manifold into a upwardly diverging and open topped trough; in which the mixture is made to foam by chemical reaction between the polyurethane components. The polyurethane mixture is fed at the bottom of the open topped trough in which foaming takes place by chemical reaction to provide a required viscosity of the outcoming foaming mixture; no release of a low-boiling foaming agent is made possible or disclosed in US-A-5,512,222 because no pressure drop is made possible or takes place in the foaming trough.

The use of a chilled trough is merely suggested to avoid the interior surface of the trough to become coated with a reacted foam which over the time causes a reduction of the volume of the trough; under such conditions the foaming mass exiting from the top of the trough is less viscous tending to run too quickly down the pour plate, resulting in defective foam slabs.

Although cooling has been suggested to retard the reaction rate of the foaming mixture on the inner walls of the trough, to better control the expansion and viscosity of the foam, cooling is not suggested or not made obvious to control the releasing of a low-boiling foaming agent in a very thin boundary layer, to maintain a constant pressure drop and a homogeneous distribution of a frothed polyurethane mixture in a foam dispensing device of the type previously referred to.

A further problem deriving from the previous one concerns the change in specific flow rate caused by the gradual occlusion of the conduit and/or the outlet meatus, particularly at the distal ends of the dispensing device, where the polyurethane mixture reaches, with a greater delay, a boundary layer which has already reacted and adhered to the contact surfaces.

In fact, since the polyurethane mixture, which flows from the centre towards the ends of a bar-shaped dispensing device, takes a fraction of time to be poured higher than that at the centre, or at the point at which initially enters the flow path, it has been discovered that this tends to facilitate the formation of a solidified layer of mixture, with consequent reduction of the pressure drop and a non homogeneous pouring or dispensing of a frothed foam over the time.

OBJECTS OF THE INVENTION

The main object of this invention is to provide a method and a device for dispensing a frothed polyurethane mixture comprising a low-boiling foaming agent dissolved under pressure in solution, particularly $CO_2$ or another low-boiling gaseous agent, by which it is possible to avoid the aforementioned problems, that is to control the releasing of gas bubbles of low-boiling foaming agent and considerably delay the formation of hardened or polymerized boundary layers of polyurethane mixture onto contact surfaces, to maintain a constant pressure drop and an homogeneous deposition of a frothed polyurethane foam, over the time in a bar-shaped foam dispensing device.

A further object of the invention is to provide a method and a device for dispensing a frothed polyurethane mixture as previously described, by which it is possible to differentiate the delivered specific flow rate, thereby improving both distribution of the mixture into a mould, or onto a supporting substrate, and distribution of the time delays between the mixing and deposition, as well as improving the washing efficiency by solvents of non-polymerized mixture which has adhered to the contact surfaces.

BRIEF DESCRIPTION OF THE INVENTION

This and further objects may be achieved by a method according to claim 1, and by a dispensing device according to claim 8.

In particular, according to a first aspect of the invention, a method for dispensing a pre-expanded polyurethane mixture by a low-boiling foaming agent dissolved in solution, suitable to maintain efficiency and reduce or eliminate the formation of a layer of reacted polyurethane mixture in a dispensing device has been provided;

in which a liquid polyurethane mixture is fed under pressure at a base reaction temperature to a dispensing device comprising a mixture distribution conduit in fluid communication with the meatus of an elongated slit provided by spaced apart facing surfaces longitudinally and orthogonally extending to the distribution conduit, or in fluid communication with the meatus of tubular ducts;

in which the elongated slit, or the tubular ducts are provided with a contact surface for a boundary layer of the polyurethane mixture flowing along said slit, or tubular ducts;

characterised by the steps of:

cooling the boundary layer of the polyurethane mixture by maintaining the contact surface of the slit, or tubular ducts, to a cooling temperature lower than said base reaction temperature; and continuosly removing the boundary layer from the contact surface, by generating and progressively causing an expansion of gas bubbles of low-boiling foaming agent in the boundary layer of the liquid polyurethane mixture, along the entire length of the meatus of the elongated slit, or tubular ducts.

BRIEF DESCRIPTION OF THE DRAWINGS

These and further characteristics of the method and the cooled device for dispensing frothed polyurethane mixtures, and some embodiments thereof will more clearly result from the following description, with reference to the drawings, in which:

Fig. 1 is a perspective view of a bar-shaped dispensing device, according to the invention;
Fig. 2 is an enlarged transversal cross sectional view, according to line 2-2 of figure 1;
Fig. 3 is a perspective view of a half-bar member of the dispensing device of figure 1;
Fig. 4 is a longitudinal cross sectional view, according to line 4-4 of figure 3, showing two possible embodiments of the conduits for circulation of a cooling fluid;
Fig. 5 is a longitudinal cross sectional view similar to the previous one, showing a third embodiment of the cooling fluid circulation conduits;
Fig. 6 is a view of the dispensing device, according to line 6-6 of figure 2, showing an exit slit for the polyurethane mixture having a meatus of constant height;
Fig. 7 is a graphic showing the distribution of the specific flow rate of the polyurethane mixture, along the meatus of the dispensing device of figure 6;
Fig. 8 is a graphic showing the cross section of the layer of foam poured onto a substrate by the dispensing device of figure 6;
Fig. 9 is a view similar to figure 6, showing an exit slit provided with a meatus of varying height;
Fig. 10 is a graphic showing the change in specific flow rate of the polyurethane mixture, for the dispensing device of figure 9;

Fig. 11 is a graphic showing a cross sectional view of the layer of foam poured onto a substrate by the dispensing device in figure 9;

Fig. 12 is a view similar to figures 6 and 9, showing an exit slit with a meatus diverging towards both side ends;

Fig. 13 is a graphic showing the change in the specific flow rate of the polyurethane mixture, for the dispensing device of figure 12;

Fig. 14 is a view similar to figure 6, showing an exit slit with different heights of the meatus at both sides;

Fig. 15 is a graphic showing the change in specific flow rate of the polyurethane mixture, for the dispensing device of figure 14;

Fig. 16 is a view similar to figure 6 showing an exit slit with different heights of the meatus in preset zones along the same slit;

Fig. 17 is a graphic showing distribution of the specific flow rate of the polyurethane mixture, along the meatus of the dispensing device of figure 16;

Fig. 18 is a graphic showing a cross sectional view of the layer of foam poured onto a half-shell of a panel, by the dispensing device of figure 16;

Fig. 19 is a top view of a half-bar of the dispensing device according to the invention, showing a different profile of the meatus of the exit slit;

Fig. 20 is a graphic showing the distribution of the specific flow rate for a dispensing device comprising the half-bar in figure 19;

Fig. 21 shows an embodiment of the dispensing device, in which the exit slit comprises a number of outlet tubular ducts alongside each other, in the form of half-circular slits along the entire delivery outline of the bar, between the distribution conduit and the mixture delivery side;

Fig. 22 shows a further embodiment of a dispensing device according to the invention, comprising a number of tubular exit ducts, and showing the cross sectional view of a layer of foam poured on a substrate;

Fig. 23 shows an arc shape embodiment of the dispensing device;

Fig. 24 is a first open loop circulation and control diagram for the temperature of the cooling fluid for the dispensing device;

Fig. 25 is a second closed loop circulation and control diagram, for the temperature of the cooling fluid for the dispensing device;

Fig. 26 is an enlarged sectional view of figure 2 devoid of cooling conduits;

Fig. 27 is an enlarged view similar to figure 26 for a dispensing device comprising cooling conduits.

DETAILED DESCRIPTION OF THE INVENTION

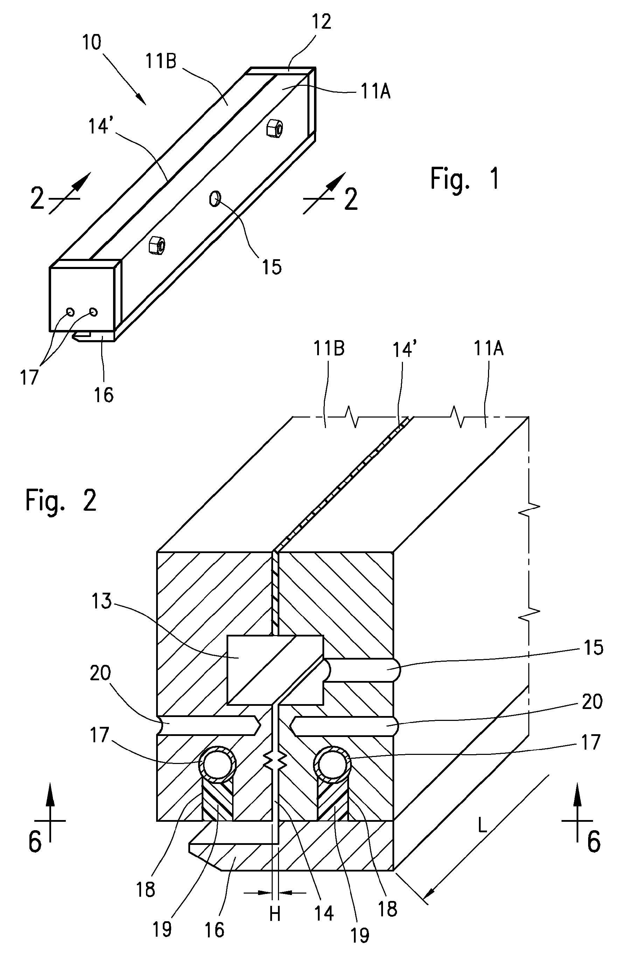

With reference to figures 1 and 2, the general features of the method and the cooled device for dispensing frothed polyurethane mixtures according to the invention will be now described.

The principle on which this invention is based consists in cooling a boundary layer, as defined further on, of a liquid polyurethane mixture flowing along contact surfaces of a dispensing device, at a temperature lower than a base reaction temperature of the polyurethane mixture fed to the same dispensing device, suitable to maintain the boundary layer at a liquid state preventing adhesion of the mixture to contact surfaces by generating and progressively causing expansion of gas bubbles of a low-boiling foaming agent into the same boundary layer along the meatus of an exit slit or exit tubular ducts.

Cooling of the boundary layer of the flowing mixture is achieved by appropriately cooling the mixture contact surfaces of the exit slit or ducts of the dispensing device, dimensioned to cause a gradual pressure drop and release of the low-boiling foaming agent, while is flowing along the dispensing device.

Figure 1 shows a diagram of the device for dispensing or pouring polyurethane mixtures obtained by mixing, in a per se known manner, two or more chemically reactive liquid components, with possible additives and a foaming agent dissolved in solution, for example $CO_2$ or another low-boiling foaming agent, in a mixing device not shown, immediately upstream the dispensing device.

The device shown comprises an elongated body 10, for example in the form of a bar which extends along a longitudinal axis, provided by two metal half-bars 11A and 11 B positioned alongside each other and disengageably fastened by bolts or by other connection means to maintaining them rigidly positioned and closed at the ends by plates 12.

In the example in figure 2, each half-bar 11A, 11 B, is provided with a longitudinal slot which, in the assembled condition of figure 2, contributes to perform a feeding path or conduit 13 for the distribution of a liquid polyurethane mixture along an exit slit 14 having a surface area which extends parallel and orthogonal to the conduit 13; alternatively, the conduit 13 could be performed in only one of the two half-bars 11A and 11 B. The conduit 13 is closed at both ends by plates 12 and communicates with a narrow exit slit 14 defining an exit meatus for the mixture which extends parallel to a side of the conduit 13 for a length L. Reference number 15 in figures 1 and 2 indicates a central inlet hole for feeding the polyurethane mixture to the distribution conduit 13, while reference number 14' indicates a metal sheet between the two half-bars 11A and 11 B, having a thickness corresponding to the height "H" of the meatus of exit slit 14, necessary for achieving a required hydraulic resistance or pressure drop, whereas reference number 16 indicates a flow deviator to attenuate the speed of the frothed foam outcoming the exit slit 14, to poure it in an homogeneous mode onto a substrate or into an open cavity of a mould. The exit slit 14 has substantially planar or facing side surface areas suitable to come into contact with the flowing polyurethane mixture, which extends parallel and orthogonally to the distribution conduit 13.

For the purpose of the description and from a technical point "meatus" means a very restricted flow path, having an height M ranging from some tenths of millimetres to some millimetres, suitable to cause a gradual pressure drop and release of the foaming agent, while maintaining a laminar flow of the polyurethane mixture flowing along said path.

As previously mentioned, the liquid polyurethane mixture has a high viscosity, equal to or higher than 100 cps, and a tendency to adhere to the contact surfaces of the exit slit 14, polymerizing and solidifying very rapidly. Therefore, over the time, on the contact surfaces of the dispensing device which are wet by the liquid polyurethane mixture, a layer of solidified mixture will build-up which tends to obstruct the conduit 13 and the exit slit 14; the increasing of the hardened layer over the time causes a progressive reduction of the pressure drop and a non homogeneous distribution of the frothed mixture.

On the basis of results obtained by computer simulation and during experimental tests with a foam dispensing device according to this invention, it has been discovered that this phenomenon may be considerably reduced, if not eliminated, by appropriately releasing and progressively causing an expansion of the gas bubbles of the foaming agent in the boundary layer of the mixture flowing along and through the meatus of exit slit 14; at a temperature suitable to maintain the boundary layer of the mixture in a liquid state, this may be obtained by an appropriate cooling of the surfaces of the conduit 13 and slit 14 with which the polyurethane mixture comes into contact. It has, in fact, been discovered that a controlled cooling of the contact surfaces with the polyurethane mixture, leads in turn to a controlled cooling and slowdown of the chemical reaction, causing a controlled releasing of bubbles of gas of the foaming agent in the cooled boundary layer; consequently, the polymerization phenomenon and hardening of the boundary layer of the mixture on the contact surfaces is prevented or considerably delayed over the time.

For purposes of this description, according to known principles of fluid dynamics, the term "boundary layer" of the polyurethane flowing mixture in conduit 13 and in the meatus of exit slit 14, refers to an ideal zone of the flow where the effects of viscosity and the laminar flow are more marked, i.e. in the close vicinity of the contact surfaces where the speed of the flow is very low.

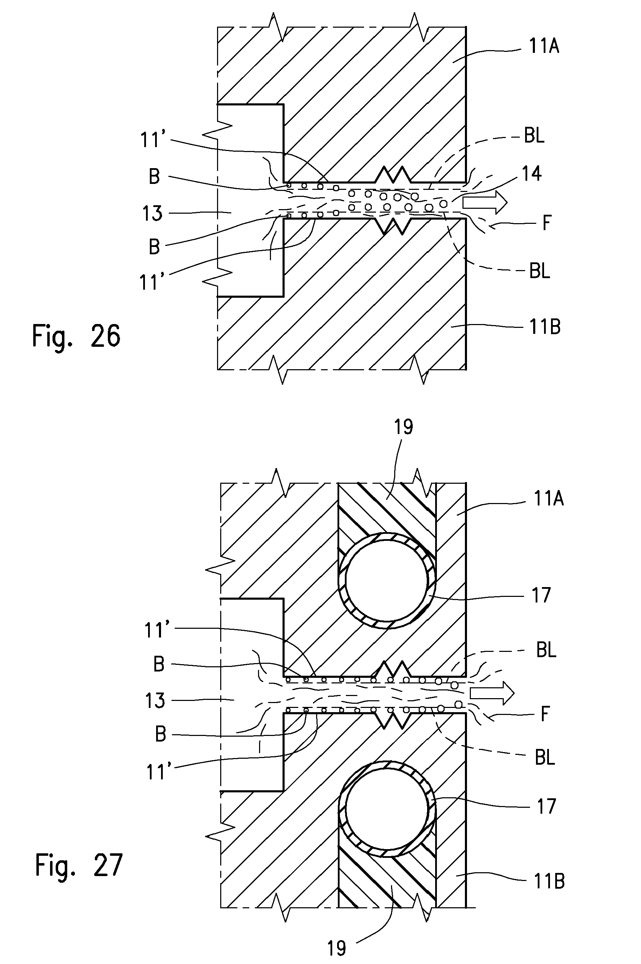

During several tests, it was discovered that good results are obtained if the contact surfaces with the boundary layer of the liquid mixture are appropriately cooled, consequently if the boundary layer is cooled to a reference temperature to lower than the temperature of the polyurethane mixture fed to the dispensing device, more simply called base reaction temperature T1, as will be explained further on with reference to figures 26 and 27.

This phenomenon is fairly complex and depending from multiple factors which influence the thermal exchange between the cooling means of the dispensing device, and the boundary layer of liquid polyurethane mixture extending along the contact surfaces.

Taking into account that the base reaction temperature T1 for conventional polyurethane formulations may be between 15° and 60°C, good results have been obtained by cooling the contact surfaces and consequently the boundary layer of liquid mixture, at a temperature from 3° to 70°C lower than T1, not excluding temperatures lower than 0°C, as a function of different process requirements, the formulation and reactivity of the polyurethane mixture, and the nature of the cooling fluid.

Cooling of the mixture contact surfaces of the dispensing device may be performed by any suitable means, for example by a system of conduits for circulation of a cooling fluid, such as a mixture of water and glycol in appropriate percentages.

In this regard, as shown in the diagram of figures 1 and 2, each half-bar 11A and 11 B of the dispensing device may be shaped with at least one circulation conduit for the cooling fluid, which extends longitudinally for the entire length L of bar 10, including the end plates 12. In the example of figure 2, each half-bar has a single longitudinal conduit consisting in a tubular pipe 17 fitted into a side open slot 18, subsequently closed by a layer of resin 19. In order to achieve the best cooling conditions, it is advisable to position the fluid circulation pipes 17 as close as possible to the contact surfaces for the polyurethane mixture both of the distribution conduit 13 and the exit slit 14 for the mixture.

The temperature of the contact surfaces of bar 10, and consequently the cooling temperature of the boundary layer of liquid polyurethane mixture, may be appropriately controlled through one or more thermal probes threaded into holes 20 of each half-bar 11A, 11 B, on one or on both sides of the exit slit 14, for example between the distribution conduit 13 and the cooling fluid circulation pipe or pipes 17, in which the holes 20 for the insertion of the thermal probes extend up to slit 14.

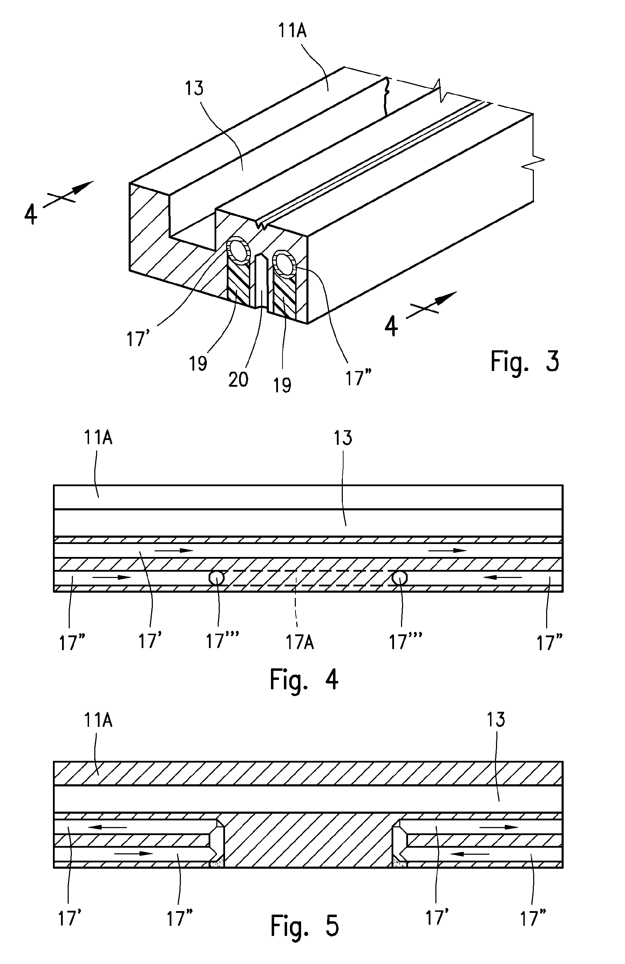

In figure 2, each half-bar 11A and 11 B has a single pipe 17 for circulation of the cooling fluid; a second solution is shown in figure 3, where the same reference numbers have been used to indicate similar or equivalent parts to the example in figure 2.

The solution in figure 3 differs from the previous one in that each half-bar 11, for example half-bar 11A, partially shown, has two pipes 17' and 17" for circulation of a cooling fluid, which extend parallel to the slit 14. Pipes 17' and 17" may extend for the entire length of bar 10, as explained further on, or may be either independent or communicating with each other.

Figure 3 also shows how each half-bar, in the specific case half-bar 11A, at its side surface defining the meatus of the slit 14, may be provided with means suitable for generating a turbulence in the flow of the mixture, since this facilitates the release of the foaming agent previously dissolved in the solution; consequently facilitates the formation of pre-expanded foam consisting of a dense cream or "froth".

Cooling of the bar shaped dispensing device 10 and consequently of the contact surfaces with the polyurethane mixture, may be performed constantly for the entire length of the bar as described in the example in figure 2, or in a differentiated way along specific sections of the same bar, as shown in the examples of figures 4 and 5, where the same reference numbers have been used as figure 3 to indicate similar or equivalent parts. In both cases, a longitudinal section of half-bar 11A according to line 4-4 of figure 3 is shown; however, what will be said for the half-bar 11A may also be applied to half-bar 11B, for a dispensing device 10 according to the invention.

In the example of figure 4, the reference number 17' indicates a continuous cooling fluid circulation pipe or duct, now represented as a longitudinal hole which extends for the entire length of the bar, to allow circulation of a cooling fluid at an initial temperature T1. On the other hand, the reference number 17" indicates a second cooling fluid circulation pipe or duct, which partially extends on a side of the duct 17, starting from each end of the half-bar, in an intermediate position between internal duct 17' and the external edge of slit 14. In the example shown, ducts 17" extend symmetrically for approximately a third of the length of the slit 14, ending at a transversal hole 17"'; however, the length of the ducts 17" could also be different to what shown. The cooling fluid which circulates in the duct 17" could have the same temperature T1 of the fluid circulating in duct 17', or a temperature T2 higher or lower than T1. In this way, it is possible to achieve a differentiated cooling, greater at both ends of the bar compared with the central zone, where the phenomenon of polymerisation and premature hardening of the polyurethane mixture in the boundary layer is more critical. Lastly, in figure 4 by reference number 17A has been indicated the possibility of a continuous duct, as for duct 17', as an alternative to two partial ducts 17".

Figure 5 shows a further embodiment of the dispensing device 10 suitable to provide a differentiated cooling; once again in figure 5, the same reference numbers have been used to indicate similar or equivalent parts. The example in figure 5 differs from the example in figure 4 in that now the first and the second ducts 17' and 17", starting from each end of bar 10, are connected to each other in an intermediate differentiated cooling zone.

As initially specified, along the flow path for the polyurethane mixture, particularly along the meatus of exit slit 14, a boundary layer of polyurethane mixture exists which tends to harden and adhere to the contact surfaces, gradually increasing over time, causing changes in the pressure drop and a non homogeneous pouring of the frothed mixture.

The solution to this problem has therefore been found by delaying or preventing the chemical reaction between the polyurethane components as well as by releasing bubbles of gas of a low-boiling foaming agent in the boundary layer by cooling the same boundary layer to a suitable temperature lower than the base polymerisation temperature, as previously defined.

The cooling of the boundary layer should be performed to minimally influence the base temperature of the remaining mixture flowing into the meatus, due to the low thermal conductivity of the polyurethane mixture and the speed of the same mixture flowing along the distribution conduit 13 and the exit slit 14.

Delaying a gas bubbles release in the boundary layer by cooling allows the mixture to be maintained in the liquid state along the contact surfaces; all this, besides delaying polymerisation of polyurethane mixture on the contact surface of the exit slit or tubular duct, allows also a continuous generation and a gradual expansion of gas bubbles of the low-boiling foaming agent in the boundary layer, along the entire length of the meatus, which cause a detachment of the same boundary layer in a still liquid state, from the contact surface, and the entrainment into the polyurethane mixture flowing along the exit slit, or tubular ducts. All this improves also the washing efficiency of the dispensing device by solvents, usually required after a short working time in a conventional device, the washing operation is facilitated since the solvent finds a boundary layer of unreacted mixture and in a liquid state.

In the previous figures, cooling is obtained by circulation of a chilling fluid; however, cooling may be performed in any other appropriate way, for example through expansion of a gas, or a low-boiling fluid for isenthalpic lamination, or by the use of half-conductor cells with Peltier effect, appropriately positioned in respective seatings.

As known, a meatus provided by parallel facing surfaces causes a linear pressure drop or pressure reduction along the lenght of the same meatus, corresponding to the dimension measured at a right-angle to the longitudinal extension of the exit slit 14, passing from the pressure existing in mixture within the distribution conduit 13 to ambient pressure.

It must also be clarified that the "specific flow rate QS" of the dispensing device 10, per mm of extension in length of exit slit 14, depends on several process and geometrical parameters; in particular, the specific flow rate is proportional to the pressure drop $\Delta P$ existing between the distribution conduit 13 and the external environment, and is inversely proportional to the viscosity of the polyurethane mixture, to the length L and the third power of the height H of the meatus, measured in the directions of two Cartesian axes at a right-angle to the longitudinal direction of the meatus itself, according to the following formula:

$$1)\ QS = \frac{\Delta P\ H^3}{\mu\ 12\ L}$$

where

QS= specific flow rate per linear mm of the meatus;
AP= pressure drop as previously defined;
H= height of the meatus, corresponding to the space existing between the two facing surfaces of the slit 14;
L= width of the meatus, corresponding to the space between the edge of the distribution conduit 13 and the external edge of the slit 14;
p= viscosity of the mixture.

In compliance with implementation of the method and the dispensing device according to the invention, in certain conditions it may be convenient to have specific flow rates up to 200%, or higher, at both ends or along preset zones of the bar shaped dispensing device 10, for the following reasons:

a) inside the distribution conduit 13 and along the exit slit 14, the liquid polyurethane mixture which flows in the direction of width L, towards the two side ends, takes a time fraction greater than the mixture coming out the central zone of the bar, at inlet hole 15; It has been discovered that this greater time could facilitate the formation of a partially reacted boundary layer which tends to block the conduit 13 and slit 14 more rapidly at the ends;

b) the partially foamed polyurethane mixture for example in the form of "froth", outcoming at the ends of slit 14 tend to rise not only in height, but, if it is not restrained, it will tend to expand laterally beyond the ends of the bar 10; the frothed mixture poured onto a substrate, therefore has a tapered section at both ends;

c) for certain manufactured articles having cavities or ribbings, it is convenient to dispense a higher specific quantity of mixture in some zones of the article, for example in the concave parts or ribbings of external metal sheets for foaming panels, or of a supporting substrate.

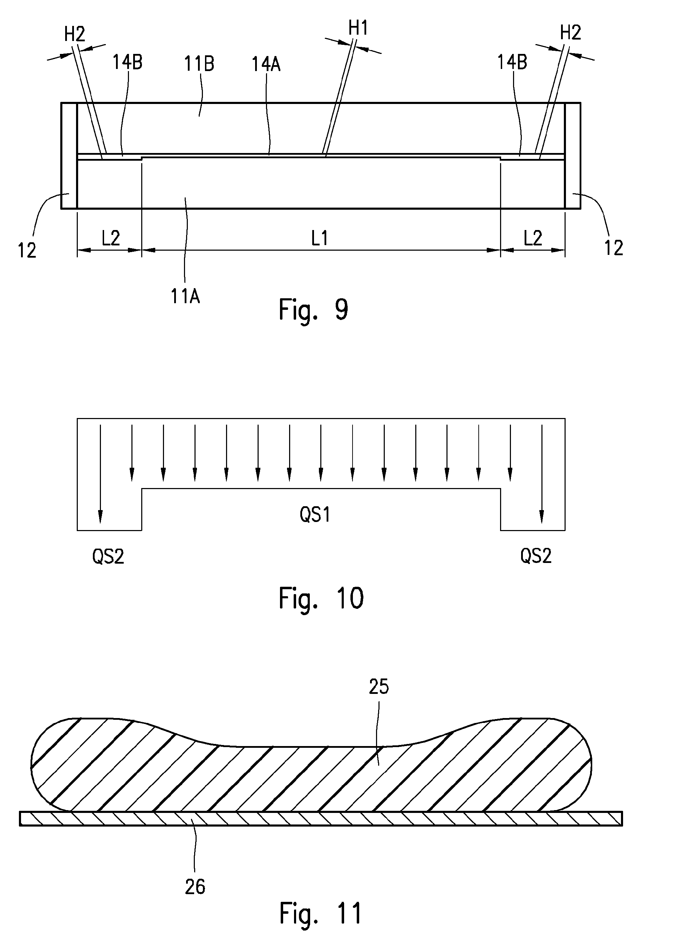

According to a further aspect of this invention, both problems may be solved by providing a higher specific flow rate QS of frothed polyurethane mixture at both ends of the bar shaped dispensing device 10, or in specific zones along lenght of the same device, in combination with cooling of the boundary layer of the mixture, as previously specified; figures 9 to 16 show some examples that will be described further on.

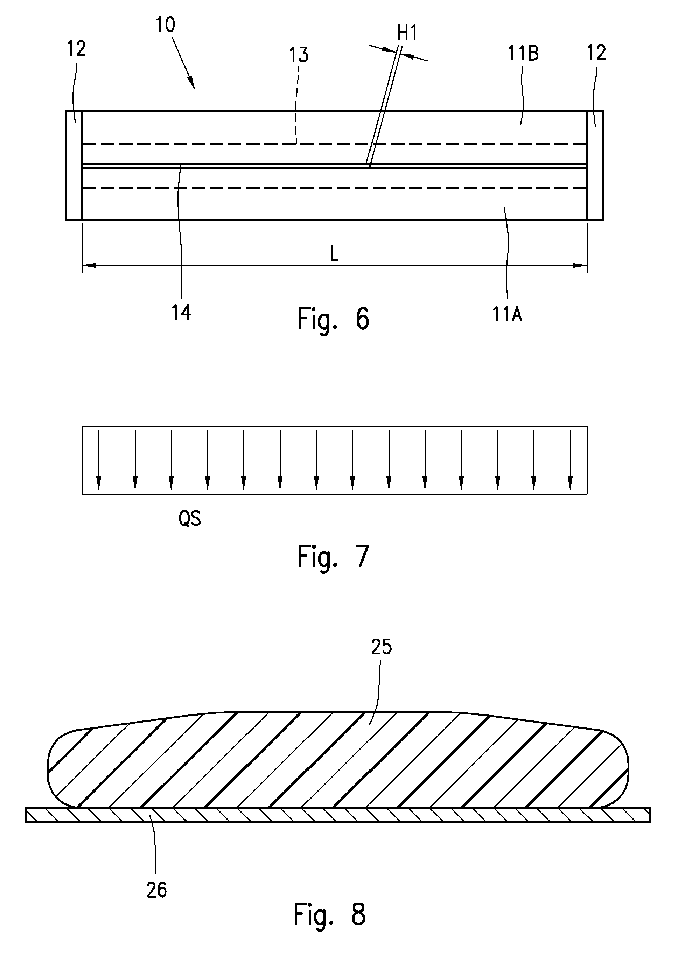

In this regard, it is considered useful to make reference to the example in figures 6 to 8, in which the same reference numbers as the previous figures have been used to indicate similar or equivalent parts.

Figure 6 once again shows a dispensing device 10 including two half-bars 11A and 11 B close together, as in figure 2, defining a mixture distribution conduit 13, and a mixture exit slit 14, comprising a meatus having a constant height H for the entire length L of the slit, and a width B, as shown.

Returning to the previous formula "1", since in the case of figure 6 the pressure drop ΔP and the geometrical parameters H, B and L of the meatus are of constant value, it follows that the specific flow rate QS has a constant value for the entire length L of the meatus, as indicated by the diagram in figure 7.

Figure 8 shows a cross sectional view of the partially foamed polyurethane mixture, or "froth", poured onto a substrate 26 by a dispensing device 10 having the constant meatus of figure 6; it may be seen from figure 8 that the partially foamed mixture 25 has a highly tapered section on the sides, due to its expansion beyond the ends of the dispensing device.

According to another aspect of this invention, it is possible to eliminate the tapering effect of the partially expanded polyurethane mixture 25 poured onto a substrate or into a mould, by increasing the specific flow rate QS of the mixture at the two ends of the dispensing device 10, or by increasing the height H of the meatus of slit 14; this not only allows a distribution of the mixture 25 onto the substrate 26 with a higher cross section at the two ends to compensate the tendency to tapering, but the greater height H of the meatus at the two ends also shortens the time required for flowing the mixture towards the ends of the dispensing device, increasing the average speed and, in combination with the cooling of the boundary layer, decreases the stratification speed of the same boundary layer, and lastly improves the washing effectiveness with solvents of the unreacted polyurethane mixture.

A first solution is shown in figures 9 to 11, where the same reference numbers have again been used to indicate similar or equivalent parts.

As may be seen in figure 9, the two half-bars 11A and 11 B are shaped to define a slit 14 with a meatus of variable height H, including a central section 14A having a first height H1 which extends for a length L1, and a side section 14B at each end, with a second height H2 greater than the first one, which extends for length L2 less than L1.

The relationship between heights H1 and H2 of the meatus and between lengths L1 and L2 may be any one, on the basis of specific requirements. By way of example, H2 may be 2% up to 220% higher than H1. In turn, L2 may vary between 3% up to 80% of L1.

Figure 10 shows a graph of the specific flow rate for the dispensing device 10 of figure 9, from which it may be seen that, at central meatus 14A, there is an initial specific flow rate of QS1, whereas, at the two end sections 14B of the meatus, there is a specific flow rate QS2 higher than the previous one. Figure 11 shows the cross sectional view of the frothed polyurethane mixture 25 upon release of the foaming agent, while it is poured onto a substrate 26, in which the foamed mixture has a greater cross section at the two ends 14B. Should the mixture be foamed between two half-moulds or two half-shells or shaped plates, this configuration allows distribution of a specific density which is much more uniform than in the case of fig. 8.

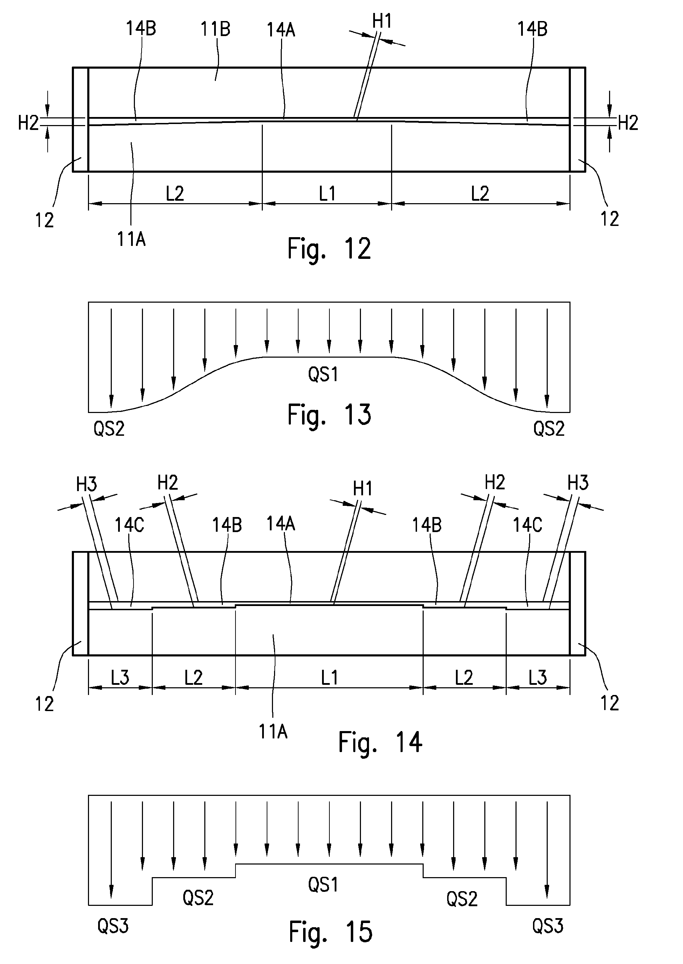

The meatus, rather than in steps, could also change linearly from H1 to H2 along two end sections of slit 14; this is shown by way of example in figure 12, where the same reference numbers as in the previous figures have been used once again, to indicate similar or equivalent parts.

In figure 12, H1 once again indicate the height of the meatus along a central section 14A of the slit, which extends for a length L1, whereas 14B indicates a divergent meatus, with linear variability from H1 to H2 in the longitudinal direction, along each end section L2. Figure 13 shows the gradual variation of the specific flow rate from QS1 to QS2.

Figures 14 and 15 show another solution in which the exit slit 14 has a meatus comprising several parts of constant height H, having an increasing value from the centre to the ends. In particular, comprises a central portion 14A with height H1 and length L1, followed by a second portion 14B with height H2 and length L2, and a third portion 14C with height H3 and length L3 in the direction of each end of the dispensing device 10.

In this case as well, the ratios between heights H and lengths L of the several portions of the meatus may be anyone, including different to the one shown in the diagram, as a function of specific requirements. By way of a non-limiting example, the ratios between the different heights of the meatus of slit 14 may be any, in particular between 1,02 and 2,2; in figure 15, a graph is shown of the three different specific flow rates QS1, QS2 and QS3, of increasing value from the centre towards the ends of the dispensing device 10.

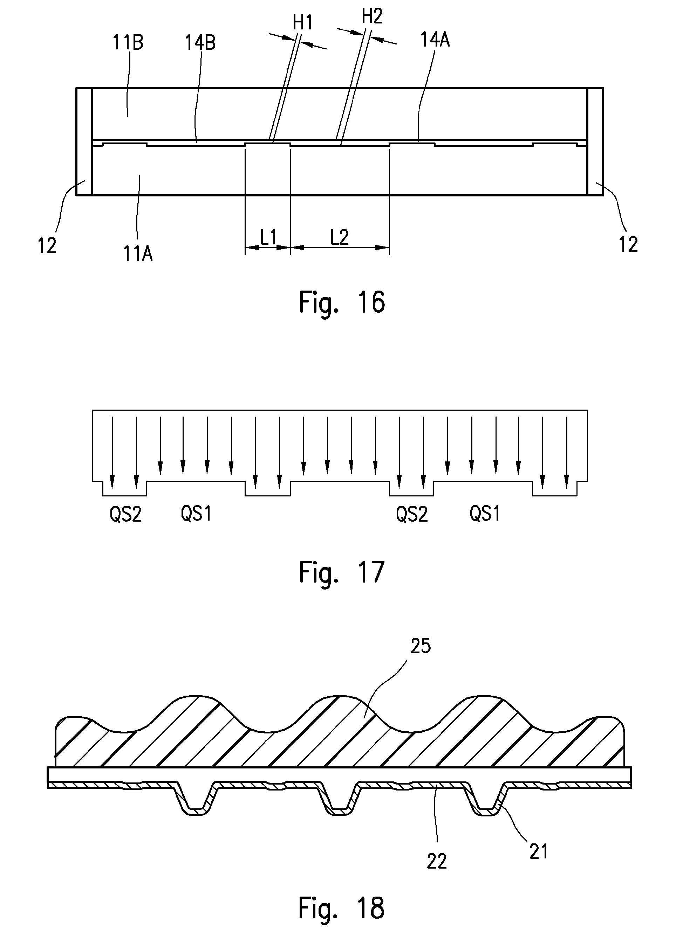

Figures 16 to 18 show a further solution, in which the same reference numbers as the previous figures have been used to indicate similar or equivalent parts. As may be seen in figure 16, the mixture exit slit in its longitudinal direction comprises several portions or zones 14A of length L1 with height H1 of the meatus, which alternate to portions 14B of length L2 with a meatus of height H2 greater than H1. The heights of meatus H1 and H2, like lengths L1 and L2, can be any; the solution in figure 16 is particularly advantageous for obtaining a different distribution of specific flow rates QS1 and QS2, as shown in figure 17, and consequently increasing or reducing the pouring of the polyurethane mixture into a cavity, for example at ribbing 21 of a shaped metal sheet 22 for foaming panels, figure 18, or for similar applications.

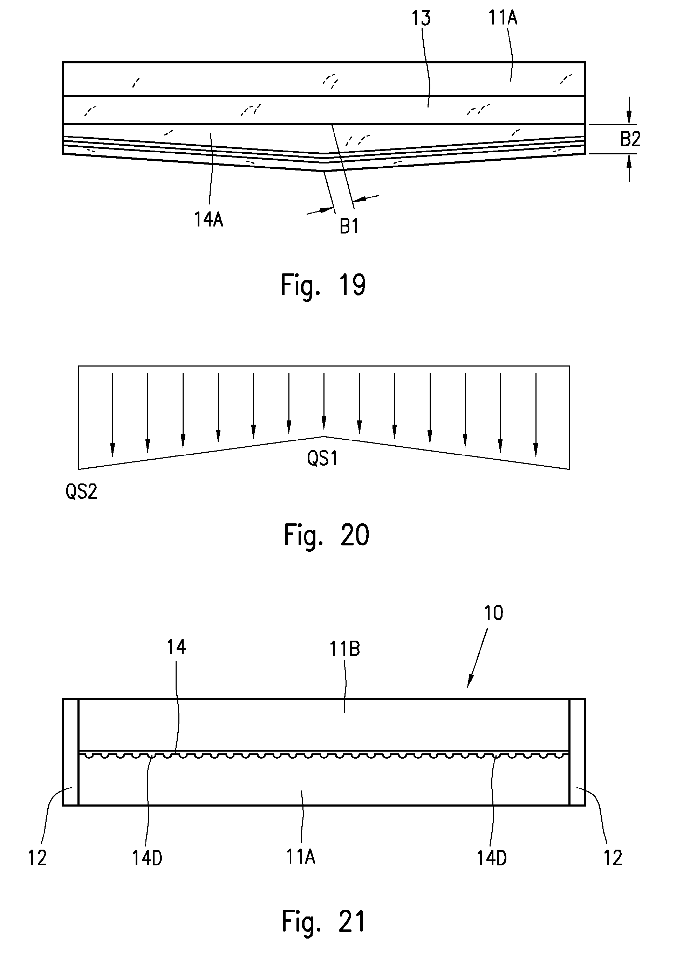

Figures 19 and 20 show another solution in which the same reference numbers as the previous figures have once again been used to indicate similar or equivalent parts.

In particular, figure 19 shows a top view of a half-bar 14A, whereas figure 20 shows the specific flow rate QS.

The solution in figure 19 differs from the previous ones, in relation to the different outline and variable width B of the lateral surfaces which define the mixture outlet meatus.

Whereas in the previous cases the meatus had constant width B, in the case of figure 19, the meatus has a width gradually decreasing from a value B1, at the centre, to a value B2, lower than the previous one at each end. Since, according to the previous formula "1", the specific flow rate QS also depends on width B of the meatus, it follows that the specific flow rate QS will gradually vary from a minimum value QS1 at the centre of the slit, to a maximum value QS2 at the ends of the slit, as shown in figure 20.

Figure 21 shows a view similar to figure 6, in which, as an alternative to slit 14 of device 10, the bar-shaped dispensing device is conformed with a number of small tubular ducts 14D side by side arranged in the longitudinal direction of the device 10, consisting of dispensing ducts of any shape, for example with a circular or half-circular section as shown, triangular, or other one on a half-bar 11A, or on both half-bars of the dispensing device 10.

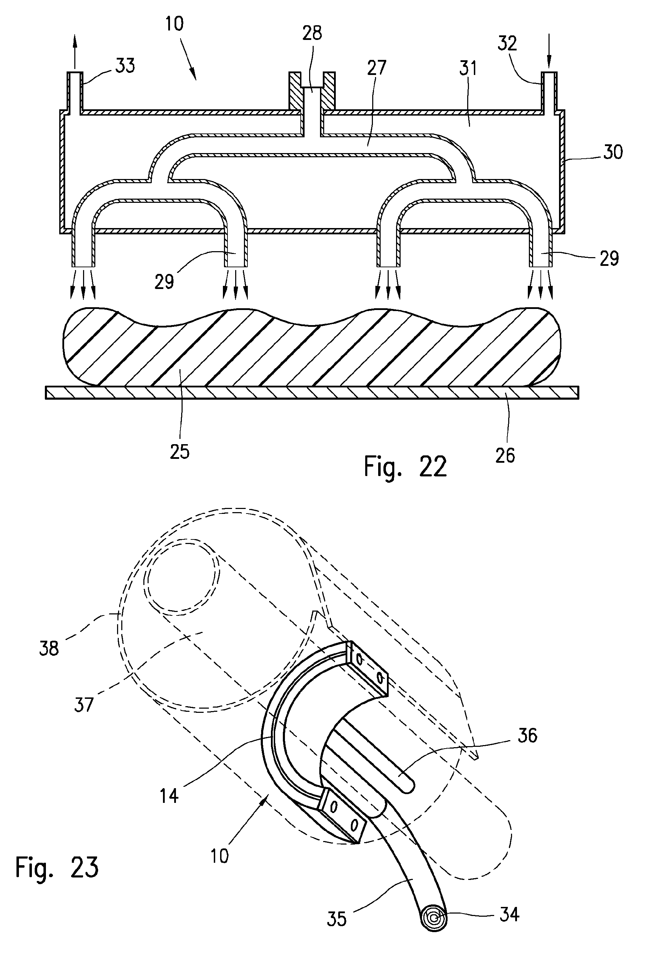

Figure 22 shows another embodiment of the dispensing device 10; the solution in figure 22 differs from the previous one, both in the polyurethane mixture dispensing and cooling system.

The device in figure 22 once again includes a mixture distribution conduit 27 which extends longitudinally to the body of a bar-shaped dispensing device having a central inlet 28 for the polyurethane mixture. The distribution conduit 27, from the opposite side to the inlet 28, at each end communicates with two or more tubular ducts 29 for pouring and dispensing the mixture 25 onto a substrate 26.

The meatus of the tubular ducts 29, like the meatus of slit 14, perform the task of distributing the mixture and controlling the pressure drop $\Delta P$ and the release of the foaming agent between, in a range between 0.2 and 6 MPa.

In this case, cooling of conduit 27 and ducts 29, and consequently the cooling of the boundary layer of the mixture in the conduit 27 and in each duct 29, is obtained by enclosing said conduit and ducts in a cooling chamber 31 of a box-shaped body 30, in which a cooling fluid is made to circulate between inlet 32 and outlet 33.

The tubular ducts 29 protrude partially from a bottom wall of the box-shaped body 30, as shown. Figure 22 shows also the cross section of the partially foamed mixture 25, poured onto the substrate 26.

In the case of the previous figures, the mixture dispensing device 10 is in the form of a straight bar body which extends along a longitudinal axis parallel to a planar substrate, or to metal sheets on which the polyurethane foam is dispensed, in the production of panels, or for similar applications.

However, without prejudice to the characteristics of the cooling system, the dispensing device according to the invention could have any other shape or conformation, on the basis of specific requirements in use.

An example is shown in figure 23, in which the dispensing device 10 is in the form of an arc shaped body, in which the exit slit 14 is positioned on a side of device 10.

This device may be used to supply a pre-foamed foam in a frothed condition by a low-boiling foaming agent, for manufacturing insulated pipes used, for example, for distribution of heating or refrigerating fluids, such as steam water.

As shown in figure 23, an isolated pipe usually comprises an internal steel pipe 37 and an external sheath 38 of greater diameter, between which a layer of insulating polyurethane material not shown, is injected by an arc shaped dispensing device 10, which is moved inside the annular hollow space between the internal pipe 37 and the external sheath 38. The external sheath may be a high-density plastic tube or sheets of polyethylene material or another suitable material, longitudinally wrapped around the internal pipe and the polyurethane foam.

As previously mentioned the dispensing device 10 in figure 23 is entirely similar and is cooled in a similar way to device 10 in the previous figures, with the sole difference that the dispensing device now in the form of an arc shaped body with internal and external bending radii corresponding to those of tube 37 and sheath 38.

In figure 23, the reference number 34 indicates also a polyurethane mixture feeding pipe, while reference numbers 35 and 36 indicate the feeding and return pipes for the cooling fluid.

During several tests, a bar-shaped dispensing device 10 similar to the one in figure 1 and 2 was used, with a meatus of constant height, obtaining good and unexpected results. The meatus had a length L=800 mm, a height H=0.25 mm and a width B=12 mm; the polyurethane mixture was supplied at a pressure selected between 0.6 and 1,2 MPa, with a total flow rate of 250 cc/sec and with an average exit speed from the meatus of approximately 1,2 m/sec. The base reaction temperature $T1$ of the polyurethane mixture fed to the dispensing device 10, during the various tests, ranged between approximately 18° and 30°C. Consequently, a cooling fluid was circulated at a temperature $T0$ lower than the basic reaction temperature $T1$ of the polyurethane mixture, for example between 0°C and a temperature a few degrees lower than the basic reaction temperature $T1$, for example 5°C.

The temperature of the contact surfaces of the dispensing device 10, near the boundary layer, was controlled by a temperature detecting system comprising thermal probes and by a closed loop regulation system to change the temperature of the cooling fluid between the values indicated above, to maintain a constant cooling temperature of the dispensing device which is influenced by change in the amount of heat, depending on corresponding changes in the flow rate of the polyurethane mixture.

The polyurethane mixture partially foamed with $CO2$ consisted of homogenous cells of good dimensions, less than 0.3 mm, and with homogenous density between 21 and 60 Kg/m$^3$.

After a working time of approximately 60 minutes, the device 10 was opened by separating the two half-bars 11A and 11B; it was discovered that even after a continued use, there was no formation of solidified mixture, but only a viscous patina of unreacted mixture, since the chemical reaction between the polyurethane components in the boundary layer and the generation of gas bubbles of the low-boiling agent has been delayed by cooling continuously removing the unreacted boundary layer along the entire length of the slit. At the end of each test, the dispensing device 10 could be cleaned completely by washing with solvent, keeping the distribution conduit and the dispensing meatus free from any built-up and blockage.

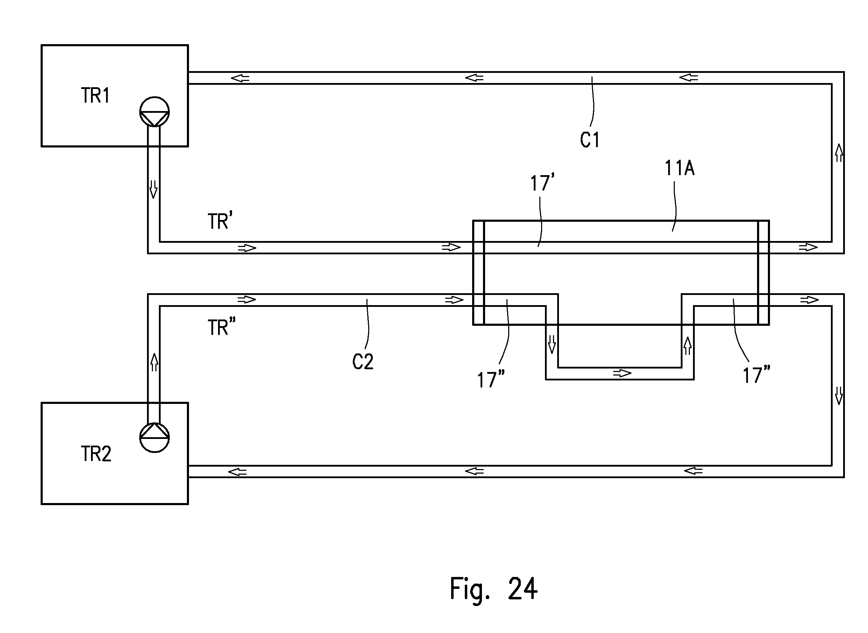

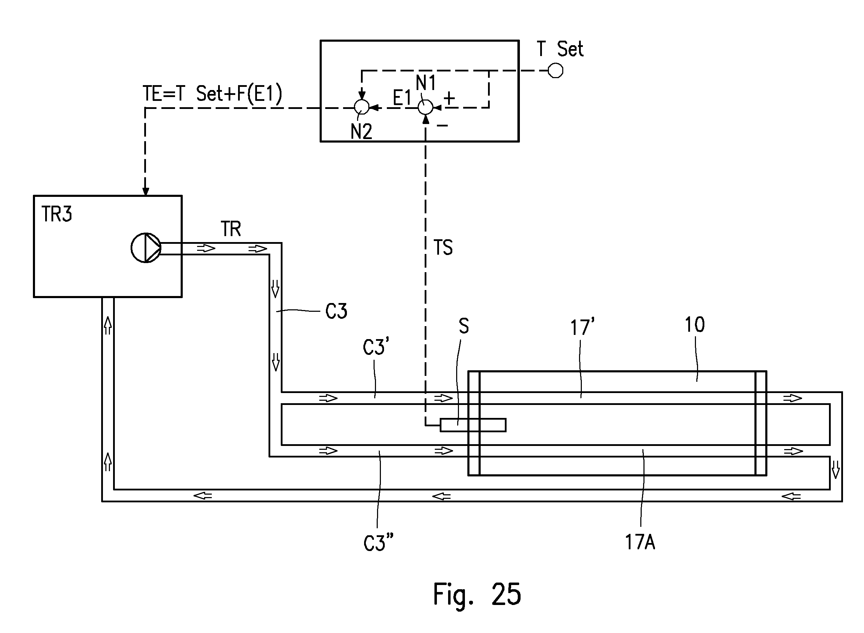

Figures 24 and 25 show two possible embodiments of cooling fluid control and circulation systems, although other solutions are possible on the basis of specific requirements and the particular shape of the device for dispensing the polyurethane mixture.

Figure 24 shows the example of a first cooling system comprising two independent circuits for the cooling media, of the open loop type, in a mixture dispensing device 10 of the type shown in figure 4.

The cooling system in figure 24 includes a first circuit C1 for feeding the cooling fluid to conduits 17' of both half-bars, one only shown, connected to a device TR1 for generation and circulation of a fluid cooled to a thermoregulated temperature TR', capable of generating a flow of a cooling fluid, for example a mixture of water and glycol, of the type commonly known as a thermoregulating chillier, for example of type RACA 40 produced by Frigo-system.

The system in figure 24 includes a second circuit C2 for the conduit 17" in each half-bar 11A and 11 B, connected to a second thermoregulated cooling device TR2, similar to the previous one, for circulation of a cooling fluid at a thermoregulated temperature TR" different from TR'.

The first thermoregulating device TR1 may be set to circulate a cooling fluid at a temperature $T1$, whereas the second thermoregulating device TR2 may be set to circulate a cooling fluid at a temperature $T2$ which may be equal to or different from temperature $T1$; also, both thermoregulating devices TR1 and TR2 may be operated to circulate the cooling fluid in the dispensing device 10 at a temperature of a basically constant value, which may be chosen each time on the basis of the formulation of the polyurethane mixture. In figure 22, the control of the temperature of the mixture contact surface of the dispensing device 10 is, through control of the temperature of the fluid by the thermoregulated cooling device TR1 and TR2.

Figure 25 shows, by way of example, a second temperature control system, of a closed loop type, for a dispensing device 10 in which the conduits 17' and 17A for circulation of the cooling fluid conform to the solution in figure 4.

In particular, according to the example in figure 25, the cooling system includes a cooling and thermoregulating device TR3, connected to a single circuit C3 having two branches C3' and C3" for feeding the cooling fluid to the two conduits 17' and 17A of the dispensing device 10.

The temperature of the cooling system is regulated by a closed loop control system, which may use two signals:

a first control signal, to preset the temperature of the device 10, so-called "feed forward", consisting of a TSet reference signal corresponding to an ideal working temperature for cooling the mixture boundary layer and surface of the dispensing device 10, obtained by tests; and
a second feedback signal Ts in a closed loop provided by a probe S, which measures the actual temperature of the device 10 close to the contact surface of the meatus.

The closed loop system also includes one or more probes S for detecting the temperature of device 10, the outlet signal of which is sent to a comparison node N1 of the thermoregulating control device TR3.

The probe S detects the temperature value Ts of the dispensing device 10, which is compared, by subtraction in N1, with the value of the reference temperature TSet; error signal E1 appropriately amplified, integrated and derived, is in turn summed as a function of F(E1), in N2 once again at TSet, sending to thermoregulator TR3 a regulation signal TE= TSet+F(E1), on the basis of which the thermoregulator TR3 will circulate a cooling fluid at temperature TR, maintaining the cooling fluid at this regulated temperature.

As previously explained the invention relates to a method and a device suitable for dispensing a frothed polyurethane mixture which has been pre-expanded by means of a low-boiling foaming agent dissolved in solution, in which the polyurethane mixture is fed, under pressure, to a dispensing device comprising a distribution conduit for the polyurethane mixture in fluid communication with the meatus of an elongated dispensing slit provided with spaced apart facing surfaces which extend longitudinally and orthogonally to the distribution conduit, or in fluid communication with the meatus of tubular ducts for dispensing the pre-expanded or frothed mixture.

In both cases the meatus , as previously defined, is dimensioned to cause a gradual pressure reduction and a gradual releasing of the low-boiling foaming agent, in a gas form, into the liquid polyurethane mixture of the boundary layer to dispense or pouring a polyurethane froth into a mould or onto a substrate; the elongated slit or the tubular ducts are provided with a contact surface for a boundary layer of liquid polyurethane mixture flowing along the pressure reduction and low-boiling agent releasing meatus, at a base reaction temperature for the chemical components.

The innovative feature resides in cooling the boundary layer of the polyurethane mixture along the meatus by maintaining the contact surface of the slit or tubular ducts, to a selected cooling temperature lower than the base reaction temperature and consequently to release in a gaseous form, and cause a progressive expansion of bubbles of low-boiling foaming agent into the boundary layer of the polyurethane mixture, for the entire length of the meatus of the elongated slit, or tubular ducts.

The chemical layer and its adhesion to the contact surface of the slit or tubular duct is therefore drastically reduced and removed for a long time, by the expanding gas-bubbles of the low-boiling agent released along the meatus of the slit, or tubular ducts.

The above may be better understood by comparing figures 26 and 27, in which some geometrical dimensions have been intentionally enlarged to clarify the new and unexpected technical results.

As shown in figure 26 and per se known, the meatus of the elongated slit 14 of a bar-shaped dispensing device 10, provide a hydraulic resistance to maintain a high and constant pressure drop, usually in the range of 0,4 to 4 MPa, between the distribution conduit 13 and outside the meatus of the exit slit 14; this pressure drop is suitable to cause over the time an homogeneous distribution and a constant flux of a liquid polyurethane mixture, because makes unaffected any pressure difference along the distribution conduit 13 depending on the drainage of the mixture along the longitudinal extension of the same slit.

Furthermore the cooling, in combination with the pressure drop is suitable to control the releasing and expansion of bubbles of gas B of the low-boiling foaming agent, or emulsified air, from the distribution conduit 13, which develops in the boundary layer BL along the meatus from the distribution conduit 13.

In a conventional dispensing device of figure 26, in absence of any cooling effect during some tests, a rapid generation of gas bubbles have been noted in the boundary layer BL, for a short length only starting from the beginning of the meatus, depending on the temperature and feeding pressure of polyurethane mixture. Conversely has been noted that the expansion velocity of the gas bubbles was again depending on the temperature and pressure reduction along the slit 14. In practice, it has been noted that along a meatus of the uncooled dispensing device 10, the gas bubbles have been generated from the starting point of the boundary layer BL and immediately entrained into the same polyurethane mixture flowing along the exit slit. Therefore the boundary layer which adhered to the contact surface of the slit 14, during the time tended to harden and form a constantly increasing build-up; the pressure drop and homogeneous distribution of the frothed mixture was therefore compromised.

Considering the above results, by an appropriate cooling of the dispensing device, as shown in figure 27, and selecting by appropriate tests a cooling temperature of the contact surfaces 11' of the slit 14, consequently of the boundary layer BL has been discovered that the gas bubbles B started to develop into the boundary layer along the entire meatus, depending on the cooling temperature of the contact surface 11' and pressure drop. This resulted in a slow release and expansion of the gas bubbles B into the boundary layer BL up to the exit end of the slit 14, as clearly depicted in figure 27. The formation of a layer of hardened polyurethane mixture was therefore strongly reduced or totally eliminated. Consequently it has been possible to maintain a good efficiency of the dispensing device, a constant pressure drop and a homogeneous distribution of the frothed polyurethane mixture built-up.

More properly, according to present invention, the cooling has been forseen of the boundary layer of the polyurethane mixture, at a temperature Ts suitable to allow a delayed generation of gas bubbles, substantially for the entire length L of the meatus.

The cooling temperature Ts of a laminar flow of mixture along the meatus, consequently the generation time of gas bubbles in the meatus, are depending on some calculation coefficients, according to the following formula:

$$2) \quad V_g = V_o \left(1 - e^{-\alpha \cdot \Delta T / T_s \cdot \eta \cdot t}\right)$$

where:

$V_g$ = specific volume of gas at Ts temperature and pressure reduction after a time "t" in the boundary layer;

$V_o$ = specific volume of gas in solution in the liquid polyurethane mixture, before the pressure reduction;

$\alpha$ = between 0,2 and 1, is a coefficient which takes into consideration the solubility of gas into the liquid mixture: the higher is the solubility, the lower is the value of $\alpha$;

$\Delta T / T_s$ = $\Delta T$ corresponds Ts - Te related to the absolute temperature Ts of the boundary layer, in which:

Ts is the temperature of the cooled boundary layer; and
Te is the boiling temperature of the foaming agent dissolved under pressure in solution;

$$\eta = 1/K \cdot \frac{\Delta P \cdot H}{\mu \cdot L}$$

is a value proportional to the specific shear rate of the liquid mixture in the boundary layer, that is a factor determining the velocity for generation of gas bubbles in the boundary layer, and in which the symbols have the meaning previously referred to;

K = 15 to 100 is a conversion factor between the shear rate and the velocity of gas bubbles generation in the boundary layer;

t = time for generation of gas bubbles along the meatus.

As previously specified, in a conventional dispensing device, in absence of cooling, the bubbles of gas expand too rapidly for a short length only from the starting point of the meatus; from tests it has been ascertained the possibility to delay the generation of the gas bubbles in the boundary layer, to obtain a bubble generation for the entire length of the meatus.

Since it is not possible to modify certain geometrical features of the meatus and some process parameters, good results have been obtained selecting $\Delta T$, that is a cooling temperature for the boundary layer, such as the time required for generation of gas bubbles, sufficient to generate at least the 63% of the gas bubbles, in respect to the entire member calculate on the basis of formula "2", should be selected between 1,2 and 12 times the average time for the polyurethane mixture to flow along the meatus, in which said average time is provided by ratio L/Vaverage, between the width L of the meatus and the average velocity of the laminar flux, calculated in a conventional mode, in a cross direction of the meatus.

It is understood that what has been described and shown with reference to the accompanying drawings has been given purely in order to illustrate the general characteristics of the method and device according to the invention, as well as several preferential embodiments.

Therefore, other modifications may be made to the dispensing device and the cooling system, without departing from the claims.

**Claims**

1. A method for dispensing a pre-expanded polyurethane mixture by a low-boiling foaming agent dissolved in solution, suitable to maintain efficiency and reduce or eliminate the formation of a layer of reacted polyurethane mixture in a dispensing device (10); in which a liquid polyurethane mixture is fed under pressure at a base reaction temperature (T1) to a dispensing device (10) comprising a mixture distribution conduit (13) in fluid communication with the meatus of an elongated slit (14) provided by spaced apart facing surfaces longitudinally and orthogonally extending to the distribution conduit (13), or in fluid communication with the meatus of tubular ducts (29); in which the elongated slit (14), or the tubular ducts (29) are provided with a contact surface for a boundary layer (BL) of the polyurethane mixture flowing along said slit (14) or tubular ducts (29); **characterised by** the step of:

 cooling the boundary layer (BL) of the polyurethane mixture by maintaining the contact surface (11') of the slit (14), or tubular ducts (29), to a cooling temperature (T0) lower than said base reaction temperature (T1); and continuosly removing the boundary layer (BL) from the contact surface (11'), by generating and progressively causing an expansion of gas bubbles of low-boiling foaming agent in the boundary layer of the liquid polyurethane mixture, along the entire length of the meatus of the elongated slit (14), or tubular ducts (29).

2. The method for dispensing a pre-expanded polyurethane mixture according to claim 1, **characterised by** the step of cooling the boundary layer (BL) of the polyurethane mixture to a temperature (T0) between 3° and 70°C lower than the base reaction temperature (T1); and causing a pressure drop ($\Delta$P) along the meatus between 0.2 and 6 MPa.

3. The method for dispensing a pre-expanded polyurethane mixture according to claim 2, **characterised by** selecting the cooling temperature (T0) of the boundary layer, at a value suitable to provide generation of gas bubbles for a time length within 1,2 and 12 times the average time for the polyurethane mixture to flow along the meatus of the elongated slit (14), or tubular ducts (29).

4. The method for dispensing a pre-expanded polyurethane mixture according to claim 1, **characterised by** the step of performing the cooling at the side ends of the contact surface (11') of the elongated slit (14), at a temperature greater than the central part of the dispensing device (10).

5. The method for dispensing a pre-expanded polyurethane mixture according to claim 1, further **characterised by** the step of dispensing a constant specific flow rate (QS) of polyurethane mixture along entire width of the elongated slit (14).

6. The method for dispensing a pre-expanded polyurethane mixture according to claim 1, further **characterised by** the step of dispensing differentiated flow rates (QS) of polyurethane mixture in one or more points of the elongated slit (14), or tubular ducts (29).

7. The method for dispensing a pre-expanded polyurethane mixture according to claim 6, **characterised by** the step of dispensing a higher specific flow rate (QS) at side ends and/or at intermediate points of the elongated slit (14).

8. A foam dispensing device (10) suitable for dispensing a frothed polyurethane mixture according to the method of claim 1, in which the dispensing device (10) comprises:

 an elongated body having a distribution conduit (13) in fluid communication with the meatus of an elongated slit (14) provided by spaced apart facing surfaces longitudinally and orthogonally extending to the distribution conduit (13), or in fluid communication with the meatus of tubular ducts (29); and

 in which the elongated slit (14), or the tubular ducts (29), are provided with a contact surface (11') for a boundary layer (BL) of the polyurethane mixture flowing along the meatus of the slit (14), or tubular ducts (29), **characterised by** comprising cooling means arranged and extending into the body of the dispensing device, close to and along said contact surfaces (11') of the elongated slit (14), or tubular ducts (29).

9. The foam dispensing device according to claim 8, **characterised in that** the cooling circuit comprises a conduit system (17; 17', 17") for circulation of a cooling fluid, extending along at least part of the width (L) of the elongated slit (14).

10. The foam dispensing device according to claim 9, **characterised in that** the conduit system (17; 17'; 17") is operatively connected to at least one open loop temperature control device (C1, C2) for circulation of a cooling fluid.

11. The foam dispensing device according to claim 9, **characterised in that** the conduit system (17; 17'; 17") is operatively connected to a closed loop temperature control device (C3) for circulation of a cooling fluid.

12. The foam dispensing device according to claim 8, **characterised in that** the elongated slit (14) has a constant height (H).

13. The foam dispensing device according to claim 8, **characterised in that** the elongated slit (14) has a differentiated height (H) in one or more longitudinally aligned zones.

14. The foam dispensing device according to claim 8, **characterised in that** the exit slit (14) has a height (H) gradually increasing from the centre to the side ends.

15. The foam dispensing device according to claim 8, **characterised in that** the elongated slit (14) is provided with different heights (H) and/or lengths in one or more zones.

16. The foam dispensing device according to claim 8, **characterised in that** the elongated slit (14) is provided with a meatus having a width or decreasing from the centre towards the side ends of the elongated slits (14).

17. The foam dispensing device according to claim 8, **characterised by** comprising an elongated linear body.

18. The foam dispensing device according to claim 8, **characterised by** comprising an arch shaped body.

Fig. 1

Fig. 2

Fig. 3

Fig. 4

Fig. 5

Fig. 6

QS

Fig. 7

Fig. 8

Fig. 9

Fig. 10

Fig. 11

Fig. 12

Fig. 13

Fig. 14

Fig. 15

Fig. 16

Fig. 17

Fig. 18

13    11A

B2

14A    B1

Fig. 19

QS1

QS2

Fig. 20

10

14    11B

12    14D    11A    14D    12

Fig. 21

Fig. 22

Fig. 23

Fig. 24

Fig. 25

11A

11'

BL

B

14

13

B

F

11'

BL

Fig. 26

11B

19

11A

11'

17

B

BL

13

F

B

BL

11'

17

Fig. 27

11B

19

Europäisches
Patentamt

European
Patent Office

Office européen
des brevets

**EUROPEAN SEARCH REPORT**

Application Number

EP 10 15 0737

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 800 905 A2 (EXTRUSION DIES INC [US]) 15 October 1997 (1997-10-15) | 8-12 | INV. B29C44/46 B29C44/34 |
| Y | * column 6, lines 8-10; figures 3, 5 * | 1-7 | |
| Y,D | US 5 512 222 A (SABOL EDWARD [US] ET AL) 30 April 1996 (1996-04-30) * column 3, paragraph 2-3; claims * * column 4, lines 29-47 * * column 1, paragraph 2 * | 1-7 | |
| A,D | WO 01/10623 A1 (WORLDWIDE POLYURETHANES B V [NL]; FIORENTINI CARLO [IT]) 15 February 2001 (2001-02-15) * page 16, paragraph 4; claims 1, 9 * | 1,8 | |
| A | US 4 900 593 A (KRIPPL KURT [DE]) 13 February 1990 (1990-02-13) * column 2; figure * | 2 | |
| A | US 4 298 557 A (BRADFORD LARRY L ET AL) 3 November 1981 (1981-11-03) * column 4, last paragraph - column 5, paragraph 3 * | 1,6-8 | TECHNICAL FIELDS SEARCHED (IPC) B29C |
| A | EP 0 683 027 A2 (NORDSON CORP [US]) 22 November 1995 (1995-11-22) * figure 7 * | 8,18 | |
| A | FR 1 449 836 A (CHAUSSON USINES SA) 6 May 1966 (1966-05-06) * page 2, lines 3-7; figures 3-4 * | 15,16 | |
| A | US 6 147 133 A (SULZBACH HANS-MICHAEL [DE] ET AL) 14 November 2000 (2000-11-14) * column 3, last paragraph - column 4, paragraph 1 * * column 7, last paragraph - column 8, paragraph 3; figures 6, 10, 11 * * column 7, lines 17-23 * | 1,8 | |

The present search report has been drawn up for all claims

| Place of search | Date of completion of the search | Examiner |
|---|---|---|
| The Hague | 19 April 2010 | Pipping, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 15 0737

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2010

| Patent document cited in search report | | Publication date | Patent family member(s) | | Publication date |
|---|---|---|---|---|---|
| EP 0800905 | A2 | 15-10-1997 | DE | 69714897 D1 | 02-10-2002 |
| | | | DE | 69714897 T2 | 30-04-2003 |
| | | | JP | 10029236 A | 03-02-1998 |
| | | | US | 5770240 A | 23-06-1998 |
| US 5512222 | A | 30-04-1996 | NONE | | |
| WO 0110623 | A1 | 15-02-2001 | AU | 5532000 A | 05-03-2001 |
| | | | DE | 60004541 D1 | 18-09-2003 |
| | | | DE | 60004541 T2 | 08-04-2004 |
| | | | EP | 1216131 A1 | 26-06-2002 |
| | | | IT | MI991795 A1 | 09-02-2001 |
| US 4900593 | A | 13-02-1990 | DE | 3729266 C1 | 10-11-1988 |
| | | | EP | 0305841 A2 | 08-03-1989 |
| | | | JP | 1163023 A | 27-06-1989 |
| US 4298557 | A | 03-11-1981 | AU | 7687581 A | 05-05-1983 |
| | | | BR | 8107170 A | 31-05-1983 |
| | | | CA | 1160011 A1 | 10-01-1984 |
| | | | DE | 3174339 D1 | 15-05-1986 |
| | | | EP | 0078340 A1 | 11-05-1983 |
| | | | JP | 58076237 A | 09-05-1983 |
| EP 0683027 | A2 | 22-11-1995 | CA | 2148552 A1 | 18-11-1995 |
| | | | JP | 7308618 A | 28-11-1995 |
| | | | US | 5556471 A | 17-09-1996 |
| FR 1449836 | A | 06-05-1966 | NONE | | |
| US 6147133 | A | 14-11-2000 | AT | 204530 T | 15-09-2001 |
| | | | BR | 9709460 A | 10-08-1999 |
| | | | CN | 1219900 A | 16-06-1999 |
| | | | DE | 19620991 A1 | 27-11-1997 |
| | | | DK | 907479 T3 | 01-10-2001 |
| | | | WO | 9745240 A1 | 04-12-1997 |
| | | | EP | 0907479 A1 | 14-04-1999 |
| | | | ES | 2162293 T3 | 16-12-2001 |
| | | | JP | 2000511477 T | 05-09-2000 |
| | | | KR | 20000015932 A | 15-03-2000 |
| | | | NO | 985258 A | 11-11-1998 |
| | | | PT | 907479 E | 28-02-2002 |
| | | | ZA | 9704510 A | 29-12-1997 |

EPO FORM P0459

For more details about this annex : see Official Journal of the European Patent Office, No. 12/82

**EP 2 208 599 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0110623 A
- EP 0645226 A
- EP 0767728 A
- US 5512222 A